# EUROPÄISCHE PATENTANMELDUNG

(11) **EP 0 965 408 A2**
(43) Veröffentlichungstag der Anmeldung: **22.12.1999**
(21) Anmeldenummer: 99110547.9
(22) Anmeldetag: 01.06.1999
(51) Int. Cl.: B23K 1/008

(54) **Durchlaufofen**

(30) Priorität: 16.06.1998 DE 19826417
(71) Anmelder: Heraeus Noblelight GmbH, 63450 Hanau (DE)
(72) Erfinder: Mittelstädt, Norbert, 63454 Hanau (DE); Höfler, Karl, 63579 Freigericht (DE); Stehling, Ronald, 63755 Alzenau (DE)
(74) Vertreter: Staudt, Armin Walter

(57) **Zusammenfassung**

Durchlaufofen zum Löten von auf Leiterplatten montierten Bauelementen, der ein durch ein Ofeninnengehäuse geführtes Förderband aufweist, das die Leiterplatten von einer Einlaufzone über eine Vorheizzone, eine Reflowzone und eine Kühlzone zu einer Auslaufzone führt, wobei entlang des Förderbands im Bereich der Vorheiz-, Reflow- und Kühlzone eine Prozeßgasströmung aufrechterhalten wird und wobei entlang der Förderstrecke mindestens eine Kondensationseinrichtung, die mittels eines Fluids gekühlte Kondensationsflächen sowie einen Kondensat-Sammelbehälter aufweist, vorgesehen ist, die flüchtige Bestandteile der Leiterplatten und/oder der Lötpasten aus der Prozeßgasströmung auskondensiert, der dadurch gekennzeichnet ist, daß die Kondensationseinrichtung als Moduleinheit mit Gehäuse ausgebildet ist, wobei das Gehäuse einen Prozeßgaszulauf und einen Prozeßgasablauf aufweist, die jeweils einem entsprechenden Prozeßgasablauf und einen entsprechenden Prozeßgaszulauf des Ofeninnengehäuses über lösbare Schnellverbindungen zugeordnet sind, und daß jeweils in dem Prozeßgasablauf und dem Prozeßgaszulauf des Ofeninnengehäuses eine Absperreinheit vorgesehen ist.

## Beschreibung

Diese Erfindung betrifft einen Durchlaufofen zum Löten von auf Leiterplatten montierten Bauelementen, der ein durch ein Ofeninnengehäuse geführtes Förderband aufweist, das die Leiterplatten von einer Einlaufzone über eine Vorheizzone, eine Reflowzone und eine Kühlzone zu einer Auslaufzone führt, wobei entlang des Förderbands im Bereich der Vorheiz-, Reflow- und Kühlzone eine Prozeßgasströmung aufrechterhalten wird und wobei entlang der Förderstrecke mindestens eine Kondensationseinrichtung, die mittels eines Fluids gekühlte Kondensationsflächen sowie einen Kondensat-Sammelbehälter aufweist, vorgesehen ist, die flüchtige Bestandteile der Leiterplatten und/oder der Lötpasten aus der Prozeßgasströmung auskondensiert.

Durchlauföfen der vorstehend angegebenen Art sind allgemein bekannt und unter anderem in der Produktinformation "Heraeus - FCI Lötanlage mit Schutzgasatmosphäre", herausgegeben von der Heraus Noblelight GmbH, D-63797 Kleinostheim (HNG - B 221/D 3C 4/97/M+T) beschrieben. Solche Lötanlagen werden als integraler Teil der Baugruppenfertigung mit Bauteilen bestückter Leiterplatten eingesetzt, um die einzelnen Bauteile zuverlässig und reproduzierbar an den Leiterplatten anzulöten. Der Transport der Leiterplatten mit den darauf bestückten Bauelementen durch den Ofen erfolgt mit einem Förderband, wobei die Bauteile einzelne Zonen durchlaufen. Eingangsseitig des Durchlaufofens passieren die Bauteile eine Eingangsschleuse, falls in dem Ofen mit einer Schutzgasatmosphäre gearbeitet wird, dann werden sie auf eine vorgegebene Temperatur vorgeheizt und in der Löt- bzw. Reflow-Zone mit Wärme, üblicherweise ein heißer Gasstrom, beaufschlagt, die ausreichend ist, um das Lot zu verflüssigen. Anschließend erfolgt eine Abkühlung und Ausgabe aus dem Ofen. Entscheidende Faktoren für die Zuverlässigkeit des Lötprozesses sowie dessen Reproduzierbarkeit sind das Temperaturprofil, das innerhalb des Durchlaufofens aufrechterhalten wird, sowie die gleichbleibende Zusammensetzung der Atmosphäre in dem Ofen. Ein wesentlicher Faktor, der den Lötvorgang beeinflussen kann, ist derjenige, daß aus den Leiterplatten und der Lotpaste während der Aufheizphase sowie während der Lötphase flüchtige Bestandteile, wie Lösungsmittel, ausgetrieben werden. Um diese flüchtigen Bestandteile der Gasatmosphäre in dem Ofenraum zu entziehen, sind zumindest eingangsseitig und ausgangsseitig der Heizzonen sogenannte Kondensatfallen vorgesehen, die fest in den Ofen integriert sind. In diesen Kondensatfallen werden Plattenwärmetauscher verwendet, an denen ein aus dem Ofen abgezweigter Gasstrom vorbeigeführt wird, um die flüchtigen Bestandteile der Leiterplatten und der Lotpasten aus dem Gasstrom durch Kondensation zu entfernen.

Solche Kondensationseinrichtungen, wie sie vorstehend erwähnt sind, müssen von Zeit zu Zeit komplett gereinigt werden, insbesondere müssen auch die Kondensate aus Sammelbehältern entfernt werden. Für eine solche Reinigung wird der Durchlaufofen üblicherweise in seinem Betrieb unterbrochen, was natürlich für den gesamten Produktionsablauf von Nachteil ist.

In Bezug auf solche Kondensatfallen sind auch Lösungen vorgeschlagen worden, bei denen Plattenwärmetauscher unmittelbar unterhalb der zu behandelnden Leiterplatten angeordnet werden, falls gleichzeitig eine Kühlung der Leiterplatten von der einen Seite erforderlich ist. Eine solche Lösung hat jedoch Nachteile dahingehend, daß die Kondensation unmittelbar in der Nähe der Leiterplatten erfolgt, wodurch die Atmosphäre und insbesondere auch die Temperatur unmittelbar im Bereich der Leiterplatten stark schwankt und beeinflußt wird. Auch solche Plattenwärmetauscher unmittelbar im Bereich der Leiterplatten haben den Nachteil, daß zu deren Reinigungs und Wartung der Ofen stillgelegt werden muß. Außerdem besteht mit solchen Plattenwärmetauschern die Gefahr, daß Fluxmittel auf die Leiterplatte tropft, falls diese Plattenwärmetauscher oberhalb des Förderbands bzw. der Leiterplatten angeordnet sind.

Ausgehend von der vorstehend angesprochenen Problematik, die sich in Verbindung mit bekannten Kondensationseinrichtungen, die in Durchlauföfen eingesetzt werden, stellt, liegt der vorliegenden Erfindung die Aufgabe zugrunde, eine solche Kondensationseinrichtung derart auszugestalten und aufzubauen, daß sie zu Reinigungs- und Wartungszwecken gut zugänglich ist und dies insbesondere nicht erfordert, daß hierzu der Durchlaufofen stillgelegt wird.

Die vorstehende Aufgabe wird bei einem Durchlaufofen mit den Merkmalen, wie sie eingangs angegeben sind, dadurch gelöst, daß die Kondensationseinrichtung als Moduleinheit mit Gehäuse ausgebildet ist, wobei das Gehäuse einen Prozeßgaszulauf und einen Prozeßgasablauf aufweist, die jeweils einem entsprechenden Prozeßgasablauf und einen entsprechenden Prozeßgaszulauf des Ofeninnengehäuses über lösbare Schnellverbindungen zugeordnet sind, und daß jeweils in dem Prozeßgasablauf und dem Prozeßgaszulauf des Ofeninnengehäuses eine Absperreinheit vorgesehen ist. Gemäß der Erfindung ist jede Kondensationseinrichtung als eigenständige Einheit, d.h. in Form eines Moduls, ausgebildet. Dieses Modul kann, über einen entsprechenden Prozeßgasablauf und einen entsprechenden Prozeßgaszulauf, an das Gehäuse des Durchlaufofens angeschlossen oder auch wieder davon gelöst werden. Weiterhin sind in dem Prozeßgasablauf und dem Prozeßgaszulauf, die dem Ofengehäuse zugeordnet sind, Absperreinheiten vorgesehen, die dann, falls die Kondensationseinrichtung in ihrer strömungsmäßigen Verbindung von dem Ofengehäuse und zu dem Ofengehäuse hin abgetrennt werden soll, geschlossen werden können. Ist eine Reinigung der jeweiligen Kondensationseinrichtung erforderlich, werden somit die Absperreinheiten, beispielsweise Schieber, verschlossen, so daß die Kondensationseinrichtung dann, unter Lösen der Schnellverbindungen, von dem Durchlaufofen abgenommen werden kann.

Es ist weiterhin möglich, eine Vielzahl solcher Kondensationseinrichtungen und die entsprechenden Prozeßgasabläufe und Prozeßgaszuläufe an dem Ofengehäuse vorzusehen, so daß wahlweise entlang der Förderstrecke zwischen Einlaufzone und Auslaufzone solche Kondensationseinrichtungen bei Bedarf montiert und betrieben werden können, um somit die Anzahl der Kondensationseinrichtungen den Gegebenheiten, insbesondere auch der Art der Prozeßgasströmung sowie der zu behandelnden Leiterplatten und der verwendeten Lötpasten, anpassen zu können. Auch können entlang der Förderstrecke mehrere solcher Kondensationseinrichtungen wahlweise betrieben werden. Es kann z.B. eine Überzahl von Kondensationseinrichtungen, d.h. zumindest eine mehr als für den Kondensationsprozeß erforderlich ist, vorgesehen werden, so daß wechselweise immer eine Kondensationseinrichtung von dem Ofengehäuse abgetrennt und zu Reinigungszwecken entfernt werden kann. Damit ist ein kontinuierlicher Betrieb des Durchlaufofens auch über sehr lange Zeiten mit einer wirksamen Auskondensierung flüchtiger Bestandteile in der Gasatmosphäre möglich, ohne die Bedingungen in dem Ofen zu verändern.

Um den gesamten Strömungsablauf der Prozeßgasströmung wenig zu beeinflussen, sollten, in Laufrichtung des Förderbands gesehen, der Prozeßgaszulauf und der Prozeßgasablauf oder der Prozeßgasablauf und der Prozeßgaszulauf der Kondensationseinrichtung nacheinander angeordnet werden. Bevorzugt wird hierbei der Prozeßgasablauf vor dem Prozeßgaszulauf angeordnet wird, und zwar in Bezug auf die Strömungsrichtung des Prozeßgases in der Kondensationseinrichtung.

Damit die Kondensationseinrichtung leicht handhabbar ist, wird in einer vorteilhaften Ausgestaltung die Kondensationseinrichtung in einer Führungseinrichtung gehalten. Mittels dieser Führungseinrichtung kann die als Moduleinheit aufgebaute Kondensationseinrichtung so relativ zu dem Durchlaufofen verschoben werden, daß sie zu Reinigungszwecken gut zugänglich ist oder als komplette Einheit von dem Durchlaufofen abnehmbar ist. Hierzu sollte weiterhin die Kondensationseinrichtung in der Führungseinrichtung quer zu der Laufrichtung des Förderbands verschiebbar gehalten werden. In einer solchen Anordnung kann das Kondensationseinrichtungs-Modul seitlich aus dem Ofengehäuse herausgezogen werden; darüberhinaus ermöglicht eine solche Anordnung, daß eine Vielzahl von Moduleinheiten auf diese Art und Weise gehandhabt werden können, ohne daß sie sich gegenseitig beeinflussen. Falls der Durchlaufofen insgesamt stillgelegt wird, können mit einer solchen Anordnung alle Moduleinheiten, die jeweils eine Kondensationseinrichtung bilden, seitlich aus dem Ofengehäuse herausgezogen werden.

Es ist ersichtlich, daß eine solche Kondensationseinrichtung sowohl an der Oberseite des Ofengehäuses, d.h. oberhalb des Förderbands, als auch unterhalb des Ofengehäuses, d.h. unterhalb des Förderbands, angeordnet werden kann, wobei die Anordnung unterhalb des Ofengehäuses bevorzugt ist.

Um jede Kondensationseinrichtung, die eingesetzt wird, unabhängig zu betreiben, weisen sie jeweils eine eigene Kühlfluid-Versorgung auf.

Da die aus dem Ofenraum abgezweigte und durch die Kondensationseinrichtung geführte Prozeßgasluft in der Kondensationseinrichtung eine Abkühlung erfährt und über den Prozeßgaszulauf dann mit einer etwas geringeren Temperatur wieder zugeführt wird, kann es von Vorteil sein, in der Kondensationseinrichtung eine Heizeinrichtung vorzusehen, die mit einer solchen Heizleistung betrieben wird, daß die von der Kondensationseinrichtung wieder in den Ofenraum zugeführte Gasströmung eine Temperatur aufweist, die der Temperatur an derjeweiligen Stelle im Ofen entspricht. Da die Abzweigung der Prozeßgasströmung in die Kondensationseinrichtung und die anschließende Zufuhr in den Ofeninnenraum an unterschiedlichen Stellen des Ofenraums erfolgt, insbesondere an unterschiedlichen Stellen entlang des Förderwegs der Bauteile, kann mit der Heizeinrichtung in der Kondensationseinrichtung die Einstellung der Temperatur der von der Kondensationseinrichtung abgegebenen Gasströmung auf einen solchen Wert erfolgen, der dem jeweiligen Ofenabschnitt an der Zufuhrstelle angepaßt ist. Da ein kritischer Punkt bei dem Anlöten der Bauteile an den Leiterplatten das definierte Einstellen des Temperaturprofils in dem Ofen kritisch ist, das darüberhinaus reproduzierbar und konstant beibehalten werden soll, kann eine zusätzliche Beeinflussung und Einstellung des Temperaturprofils mit dieser Heizeinrichtung von Vorteil sein. Bevorzugt wird eine solche Heizeinrichtung im Bereich des Prozeßgasablaufs aus der Kondensationseinrichtung eingefügt, d.h. an einer Stelle, an der der durch die Kondensationseinrichtung geführte Gasstrom bereits von seinen flüchtigen Bestandteilen befreit ist.

Die Kondensationseinrichtung kann auch zur Kühlung partiell entlang der Förderstrecke eingesetzt werden, falls dies der Prozeßablauf erforderlich machen sollte.

Um den Prozeßgaszulauf und den Prozeßgasablauf der Kondensationseinrichtung dem jeweiligen Prozeßgasablauf und dem jeweiligen Prozeßgaszulauf des Ofenraums anpassen zu können, ohne daß im Bereich dieser Anschlußstellen Spannungen entstehen, oder um Fertigungstoleranzen ausgleichen zu könenn, kann jeweils diesen Verbindungsstellen ein flexibles, rohrförmiges Anschlußteil zugeordnet werden.

Um die Verbindung zwischen den Anschlüssen der Kondensationseinrichtung und den jeweiligen Anschlüssen des Ofenraums leicht handhabbar vornehmen zu können, kann eine Andrückeinheit vorgesehen werden, die die jeweiligen Anschlußverbindungen davon in dem an dem Durchlaufofen angeordneten Zustand der Kondensationseinrichtung andrückt, während diese Andrückeinrichtung den Anpreßdruck dann freigibt, wenn die Anschlußverbindungen gelöst werden sollen. In einem einfachen Aufbau wird hierzu die Andrückeinheit mit einer Exzenterscheibe ausgestattet, die über eine Handhabung gedreht werden kann, um die Kondensationseinrichtung, beispielsweise in den vorstehend angegebenen Führungsschienen, an den Ofen anzudrücken oder von diesem zu lösen.

Weitere Einzelheiten und Merkmale der Erfindung ergeben sich aus der nachfolgenden Beschreibung eines Ausführungsbeispiels anhand der Zeichnungen. In der Zeichnung zeigt
- Figur 1: eine schematische Seitenansicht eines Durchlaufofens mit den einzelnen Behandlungszonen und mehreren daran angeordneten Kondensationseinrichtungen und
- Figur 2: eine schematische Seitenansicht einer Kondensationseinrichtung, wie sie in der Figur 1 eingesetzt ist.

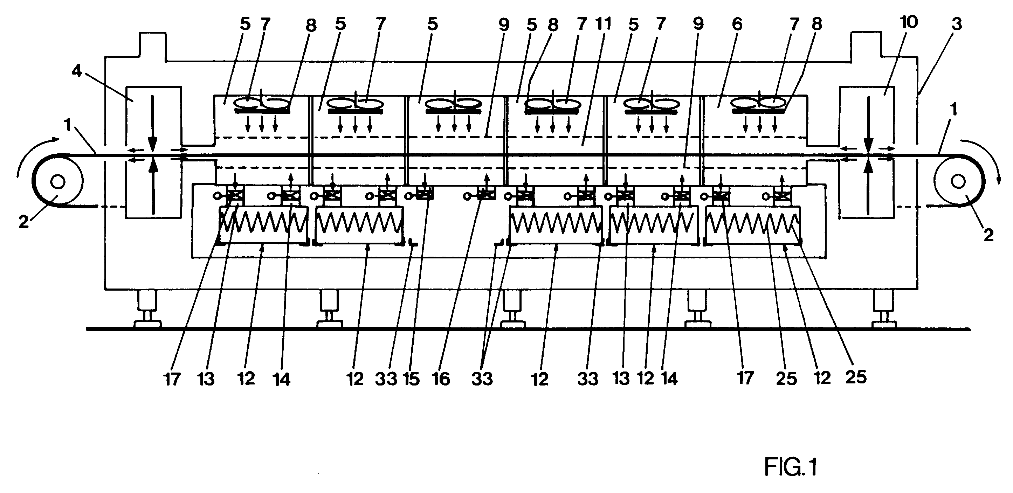

Der Durchlaufofen, wie er in Figur 1 zu sehen ist, weist ein Förderband 1 (alternativ einen Kettenförderer) auf, das über zwei Walzen 2, die außerhalb des Ofengehäuses 3 liegen, geführt ist. Entlang des Förderbands 1 besitzt der Ofen eine Einlaufschleuse 4, mehrere Vorheizzonen 5, in dem gezeigten Ofen genauer gesagt 5 Vorheizzonen, sowie eine Reflow- bzw. Lötzone 6. Auslaufseitig der Lötzone schließt sich eine Auslaufschleuse 10 an. Oberhalb der einzelnen Zonen sind jeweils ein Gebläse 7 sowie mehrere Infrarotstrahler 8 angeordnet (in der Figur 1 nur schematisch dargestellt). Unterhalb der Infrarotstrahler 8 befinden sich jeweils Platten 9, in denen Schlitze gebildet sind. Entsprechende Platten sind auch unterhalb des Förderbands 1, ebenfalls mit dem Bezugszeichen 9 bezeichnet, angeordnet.

Die mit Bauteilen bestückten Leiterplatten (nicht dargestellt), die verlötet werden sollen, werden einlaufseitig des Ofens auf das Förderband 1 aufgelegt und durch den Ofen befördert. Die Einlaufschleuse 4 und die Auslaufschleuse 10 sind insbesondere dann erforderlich, wenn in dem Ofeninnenraum 11 eine geeignete Atmosphäre, beispielsweise eine Stickstoffatmosphäre, aufrechterhalten werden soll. Danach werden entlang der Vorheizzonen 5 die Bauteile auf eine erforderliche Temperatur, unter Einhaltung eines vorgegebenen Temperaturprofils entlang der Förderstrecke, aufgeheizt, um dann im Bereich der Lötzone 6 durch die heiße Gasströmung, die über die Düsen-Platten 9 von oben und/oder von unten auf die Leiterplatten und die Bauteile zugeführt werden, anzulöten. Dann werden die Bauteile, über eine Kühlstrecke und die Auslaufzone 10 aus dem Ofen herausgeführt.

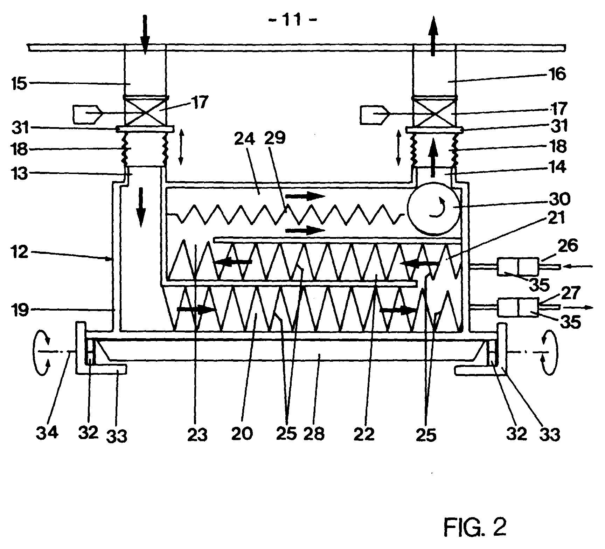

Da die einzelnen Bauteile zum einen eine gewisse Feuchtigkeit in den Ofen einbringen, zum anderen die Leiterplatten und die Lotpasten flüchtige Bestandteile enthalten, die aufgrund der Temperaturen im Ofen, die in der Lötzone bei etwa 240°C liegen, verdampft bzw. ausgegast werden, ist die Gasströmung im Ofeninnenraum 11 stark mit diesen Bestandteilen behaftet. Da sich diese Bestandteile negativ auf die Vorbehandlung der Leiterplatten mit den Bauteilen und den Lötprozeß auswirken, sind entlang des Ofeninnenraums, in dem Beispiel des Durchlaufofens der Figur 1 an der Unterseite davon, mehrere Kondensationseinrichtungen 12 angeordnet, die schematisch dargestellt sind. Jede dieser Kondensationseinrichtungen 12 weist, wie dies deutlicher die Figur 2 zeigt, einen Prozeßgaszulauf 13 und einen Prozeßgaszulauf 14 auf, um einen Teil der Gasströmung in dem Ofeninnenraum 11 in die jeweilige Kondensationseinrichtung 12, über einen jeweiligen den Zonen 5, 6 des Ofeninnenraums 11 zugeordneten Prozeßgasablauf 15 und einen Prozeßgaszulauf 16, abzuzweigen

Zwischen dem Prozeßgasablauf 15 des Ofeninnenraums 11 und dem Prozeßgaszulauf 14 der Kondensationseinrichtung 12 und dem Prozeßgasablauf 14 der Kondensationseinrichtung 12 und dem Prozeßgaszulauf 16 des Ofeninnenraums 11 ist jeweils ein Absperrschieber 17 eingefügt. Weiterhin ist zwischen diesem Absperrschieber 17 und der Kondensationseinrichtung 12 ein flexibler Wellenschlauch 18 zwischengefügt, um eventuelle Toleranzen auszugleichen.

Wie ersichtlich ist, bildet jede Kondensationseinrichtung 12 eine Moduleinheit, die gut zugänglich unterhalb des Ofeninnenraums 11 angeordnet ist.

Wie in Figur 2 zu sehen ist, wird die über den Prozeßgasablauf 15 und den Absperrschieber 17 abgezweigte Gasströmung, mit den Strömungspfeilen angezeigt, über einen ersten Querkanal 20, am unteren Bereich des Gehäuses 19 der Kondensationseinrichtung 12 zu der rechten Seite des Gehäuses (aus Sicht der Figur 2) geführt, dann über einen ersten vertikalen Kanalabschnitt 21 zu einem zweiten Querkanal 22 bis zu der linken Seite des Gehäuses 19 geführt, und wird von dort über einen zweiten vertikalen Kanalabschnitt 23 und über einen dritten Querkanal 24 wieder zu der rechten Seite des Gehäuses 19 und zu dem Prozeßgasablauf 14 geführt.

In dem ersten Querkanal 20 und dem zweiten Querkanal 22 sowie im Bereich des vertikalen Kanalabschnits 21 ist eine Kühlschlange 25 angeordnet, durch die ein Kühlfluid, beispielsweise Wasser, über eine Kühlfluidzufuhrleitung 26 und eine Kühlfluidabfuhrleitung 27 geführt wird. Entlang dieser Kühlschlange 25 werden flüchtige Bestandteile, die in dem Gasstrom mitgeführt werden, kondensiert und in einer Sammelwanne 28 aufgefangen, die einen gesonderten Ablauf, der nicht dargestellt ist, aufweisen kann.

Während in dem ersten Querkanal 20 und dem zweiten Querkanal 22 die Kühlschlange 25 vorgesehen ist, verläuft in dem dritten Querkanal 24 eine Heizspirale 29, mit der das Prozeßgas, bevor es wieder in dem Ofeninnenraum 11 zugeführt wird, aufgeheizt wird. Diese Aufheizung an dieser Stelle hat den Vorteil, daß ein Temperaturverlust in der Kondensationseinrichtung 12, insbesondere entlang der Kühlschlangen 25, durch diese Heizspirale 29 kompensiert werden kann, so daß die dem Ofeninnenraum 11 zugeführte Prozeßgasströmung zumindest auf eine solche Temperatur wieder aufgeheizt wird, die der Temperatur im Bereich des Prozeßgasablaufs 15 entspricht. Falls entlang der Förderstrecke in diesem Teil des Ofeninnenraums 11, der dem jeweiligen Prozeßgaszulauf 16 zugeordnet ist, eine gegenüber dem Prozeßgasablauf 15 höhere Temperatur erwünscht ist, kann mit der Heizeinrichtung 29 auch eine solche erhöhte Temperatur eingestellt werden. Dies bedeutet, daß mittels dieser Heizeinrichtung 29 das Temperaturprofil innerhalb des Ofens in Bezug auf die wieder dem Ofeninnenraum 11 zugeführte Prozeßgasströmung beeinflußt werden kann. Auch ist es mit dieser Heizeinrichtung bzw. Heizspirale 29 möglich, das Temperaturprofil in gewünschten Grenzen zu beeinflussen, insbesondere in Bezug auf die Unterseite der zu lötenden Leiterplatten und Bauteile, falls die Kondensationseinrichtungen 12 unterhalb des Ofeninnenraums angeordnet sind.

Wie anhand der Figur 2 zu sehen ist, wird die Prozeßgasströmung durch die Kondensationseinrichtung 12 mittels eines Walzengebläses 30 erzeugt, das bevorzugt im Bereich des dritten Querkanals 24 unmittelbar in der Nähe des Prozeßgasablaufes 12 angeordnet ist. Da in dem dritten Querkanal 24 bereits getrocknetes Gas, d.h. Gas, das von seinen Kondensationsprodukten befreit ist, geführt wird, wird durch das Walzengebläse 30 die wieder in den Ofeninnenraum 11 zugeführte Prozeßgasströmung, wenn überhaupt, nur gering beeinflußt.

Da es erforderlich ist, die Kondensationseinrichtung 12 von Zeit zu Zeit zu reinigen, sind die beiden Absperrschieber 17 vorgesehen. Falls eine der Kondensationseinrichtungen 12 eine Reinigung erfordert, werden die entsprechenden Absperrschieber 17 verschlossen und Schnellverbindungen 31 unterhalb dieser Absperrschieber 17 werden gelöst. Die Kondensationseinrichtung 12 bzw. deren Gehäuse 19 ruht dann über Exzenterscheiben 32 und nicht näher dargestellte Laufrollen auf Winkelschienen 33, die zusammen eine Führungseinrichtung bilden. Diese Winkelschienen 33 erstrecken sich quer zu der Laufrichtung des Förderbands 1 bzw. die Achsen 34 der Exzenterscheiben 32 bzw. der Laufrollen sind parallel zu der Förderrichtung orientiert. Nach Lösen dieser Schnellverbindungen 31 werden die Exzenterscheiben 32 um die Achsen 34, beispielsweise indem sie auf einer Welle angeordnet sind, mittels geeignetem Handhabungsteil gedreht, so daß die Kondensationseinrichtung 12 nach unten verschoben wird, und die Kondensationseinrichtung 12 im Bereich der Schnellverbindungen 31 gelöst und frei ist. Hiernach kann die gesamte Kondensationseinrichtung 12 auf den Winkelschienen 33 seitlich aus dem Ofengehäuse, d.h. senkrecht zu der Zeichenebene der Figuren 1 und 2, herausgezogen und gewartet werden. Auch können die Kühlfluidzulaufleitung und die Abfuhrleitung 26 und 27 über Kupplungsteile 35 gelöst werden. Nach einer Reinigung der Kondensationseinrichtung 12 erfolgt die Montage davon in der umgekehrten Reihenfolge. Nachdem die Kondensationseinrichtung 12 dann wieder über die Schnellverbindungen 31 mit den Absperrschiebern 17 verbunden ist, können die Absperrschieber 17 geöffnet werden, um das Prozeßgas zu behandeln.

Wie in Figur 1 dargestellt ist, können diese Kondensationseinrichtungen 12 unabhängig voneinander in der vorstehend beschriebenen Art und Weise von dem Ofeninnenraum 11 abgetrennt und seitlich aus dem Ofengehäuse 3 über eine Wartungsöffnung 36 herausgezogen werden. Falls der Durchlaufofen über sehr lange Zeiträume betrieben wird, ist es möglich, die einzelnen Kondensationseinrichtungen 12 eine nach der anderen abzutrennen und aus dem Ofen herauszunehmen, so daß jeweils die verbleibenden Kondensationseinrichtungen 12 ihre Aufgabe, den Prozeßgasstrom von flüchtigen Bestandteilen zu reinigen, übernehmen.

In der Anordnung der Figur 1 ist in der dritten Zone keine Kondensationseinrichtung dargestellt, um anzudeuten, daß die Kondensationseinrichtungen 12 beliebig, wie dies für den Ofenbetrieb erforderlich ist, angeordnet oder weggelassen werden kann.

## Patentansprüche

1. Durchlaufofen zum Löten von auf Leiterplatten montierten Bauelementen, der ein durch ein Ofeninnengehäuse geführtes Förderband aufweist, das die Leiterplatten von einer Einlaufzone über eine Vorheizzone, eine Reflowzone und eine Kühlzone zu einer Auslaufzone führt, wobei entlang des Förderbands im Bereich der Vorheiz-, Reflow- und Kühlzone eine Prozeßgasströmung aufrechterhalten wird und wobei entlang der Förderstrecke mindestens eine Kondensationseinrichtung, die mittels eines Fluids gekühlte Kondensationsflächen sowie einen Kondensat-Sammelbehälter aufweist, vorgesehen ist, die flüchtige Bestandteile der Leiterplatten und/oder der Lötpasten aus der Prozeßgasströmung auskondensiert, dadurch gekennzeichnet, daß die Kondensationseinrichtung (12) als Moduleinheit mit Gehäuse (19) ausgebildet ist, wobei das Gehäuse (19) einen Prozeßgaszulauf (13) und einen Prozeßgasablauf (14) aufweist, die jeweils einem entsprechenden Prozeßgasablauf (15) und einen entsprechenden Prozeßgaszulauf (16) des Ofeninnengehäuses (11) über lösbare Schnellverbindungen (31) zugeordnet sind, und daß jeweils in dem Prozeßgasablauf (15) und dem Prozeßgaszulauf (16) des Ofeninnengehäuses (11) eine Absperreinheit (17) vorgesehen ist.

2. Durchlaufofen nach Anspruch 1, dadurch gekennzeichnet, daß in Laufrichtung des Förderbands (1) gesehen der Prozeßgaszulauf (13) und der Prozeßgasablauf (14) oder der Prozeßgasablauf (14) und der Prozeßgaszulauf (13) der Kondensationseinrichtung (12) nacheinander angeordnet sind.

3. Durchlaufofen nach Anspruch 2, dadurch gekennzeichnet, daß der Prozeßgasablauf (14) vor dem Prozeßgaszulauf (13) angeordnet ist.

4. Durchlaufofen nach einem der Ansprüche 1 bis 3, dadurch gekennzeichnet, daß die Kondensationseinrichtung (12) in einer Führungseinrichtung (32, 33) gehalten ist.

5. Durchlaufofen nach Anspruch 4, dadurch gekennzeichnet, daß die Kondensationseinrichtung (12) in der Führungseinrichtung (32, 33) quer zu der Laufrichtung des Förderbands (1) verschiebbar gehalten ist.

6. Durchlaufofen nach Anspruch 1, dadurch gekennzeichnet, daß zwischen Einlaufzone (4) und Auslaufzone (11) mehrere Kondensationseinrichtungen (12) angeordnet sind.

7. Durchlaufofen nach Anspruch 6, dadurch gekennzeichnet, daß jede Kondensationseinrichtung (12) eine eigene Kühl-Fluid-Versorgung (26, 27) aufweist.

8. Durchlaufofen nach Anspruch 1, dadurch gekennzeichnet, daß die Kondensationseinrichtung (12) eine Heizeinrichtung (29) aufweist.

9. Durchlaufofen nach Anspruch 8, dadurch gekennzeichnet, daß die Heizeinrichtung (29) strömungsausgangsseitig der Kondensationseinrichtung (12) angeordnet ist.

10. Durchlaufofen nach einem der Ansprüche 1 bis 9, dadurch gekennzeichnet, daß dem Prozeßgaszulauf (13) und dem Prozeßgasablauf (14) der Kondensationseinrichtung (12) jeweils ein flexibles, rohrförmiges Anschlußteil (18) zugeordnet ist.

11. Durchlaufofen nach einem der Ansprüche 1 bis 10, dadurch gekennzeichnet, daß die Kondensationseinrichtung(en) (12) unterhalb des Förderbands (1) und außerhalb des Ofeninnengehäuses (11) angeordnet ist (sind).

12. Durchlaufofen nach Anspruch 4, dadurch gekennzeichnet, daß der Prozeßgaszulauf (13) und der Prozeßgasablauf (14) der Kondensationseinrichtung (12) mittels einer Andrückeinheit (32) an dem zugeordneten Prozeßgaszulauf (16) und dem Prozeßgasablauf (15) des Ofeninnengehäuses (11) andrückbar oder lösbar sind.

13. Durchlaufofen nach Anspruch 12, dadurch gekennzeichnet, daß die Andrückeinheit Exzenterscheiben (32) aufweist.
